(19) Europäisches Patentamt

European Patent Office

Office européen des brevets

(11) Publication number: **0 536 753 A1**

## (12) EUROPEAN PATENT APPLICATION

(21) Application number: **92117209.4**

(22) Date of filing: **08.10.92**

(51) Int. Cl.5: **C08L 51/06**, C08L 51/00, C08L 51/04, C08K 5/17, C08L 25/12, C08L 25/04

(30) Priority: **08.10.91 IT MI912665**

(43) Date of publication of application:
**14.04.93 Bulletin 93/15**

(84) Designated Contracting States:
**AT BE DE ES FR GB IT NL SE**

(71) Applicant: **Himont Incorporated**
**2801 Centerville Road**
**New Castle County Delaware(US)**

(72) Inventor: **Silvestri, Rosanna**
**27, Via Della Pozza**
**I-36015 Schio (Vicenza)(IT)**

(74) Representative: **Zumstein, Fritz, Dr. et al**
**Zumstein & Klingseisen Patentanwälte**
**Bräuhausstrasse 4**
**W-8000 München 2 (DE)**

(54) **Thermoplastic polymer compositions.**

(57) Thermoplastic polymer compositions obtained by mixing:

A) from 10 to 90 parts by weight of one or more modified polyolefins obtained by grafting an unsaturated carboxylic acid and/or its derivatives, or their mixtures with nonmodified polyolefins; with

B) from 10 to 90 parts by weight of an aromatic vinyl polymer, or a copolymer of an aromatic vinyl monomer, with acrylonitrile and/or methacrylonitrile, which are modified grafting or copolymerizing with an unsaturated carboxylic acid and/or its derivatives, or their mixtures with vinyl aromatic polymers or copolymers of an aromatic vinyl monomer with acrylonitrile and/or methacrylonitrile; and with

C) from 0.1 to 7 parts by weight of an organic compound containing at least two primary or secondary amino groups.

FIELD OF THE INVENTION

The present invention relates to thermoplastic polymer compositions which can be used to form molded items, sheets or films by way of injection molding, compression molding or extrusion.

BACKGROUND OF THE INVENTION

It is known that thermoplastic polyolefin polymers, and especially polypropylene, have a low specific weight, excellent resistance to chemical agents, are easy to process and are inexpensive.

However, they have a limited heat resistance, rigidity and impact resistance when compared with other types of known polymers. Moreover, they cannot be varnished, glued or imprinted, unless surface treatments are used, such as flame, corona or plasma treatments.

On the other hand, the copolymers of a vinyl aromatic monomer with acrylonitrile and/or methacrylonitrile, such as for example styrene-acrylonitrile copolymer (SAN), have good tensile properties and good heat resistance; they can be easily varnished, glued and imprinted. Moreover, these monomers form polymers, ABS for example, that have very high impact resistance even at low temperatures when modified by the addition of rubbers, such as polybutadiene.

There is a need to have a thermoplastic composition which combines the abovementioned advantages of polyolefins and vinyl aromatic copolymers.

On the other hand, the simple mixture of these two types of polymers brings forth products which have poor mechanical properties. This is essentially due to the fact that these two classes of polymers are barely compatible and dispersable with each other.

As a result of the inventive advances described herein there has been found a thermoplastic polymer composition whose mechanical and thermal properties have been improved with respect to the properties of the corresponding polyolefin, and can be imprinted, varnished and glued.

Therefore, the polymer composition of the present invention can be used in applications that require, in addition to the properties generally obtained with polyolefins, such as light weight and tensile strength, properties such as heat resistance, and low thermal expansion coefficient, which cannot be obtained with polyolefins. Such applications include, for example, under-the-hood applications in the automotive industry.

It should be also noted that the composition of this invention has mechanical properties which resemble those of reinforced polyolefins, but it offers the advantage of being lighter and easier to process.

SUMMARY OF THE INVENTION

The present invention relates to a thermoplastic polymer composition obtained by mixing:

A) from 10 to 90 parts by weight, preferably 30 to 70 parts, of one/or more modified polyolefins obtained by grafting an unsaturated carboxylic acid and /or derivatives, or their mixtures with nonmodified polyolefins; with

B) from 10 to 90 parts by weight, preferably 30 to 70 parts, of an aromatic vinyl polymer, or a copolymer or an aromatic vinyl monomer, with acrylonitrile and/or methacrylonitrile, optionally modified by adding rubbers, modified by grafting or copolymerizing with an unsaturated carboxylic acid and/or its derivatives, or their mixtures with aromatic vinyl polymers or copolymers of an aromatic vinyl monomer with acrylonitrile and/or methacrylonitrile, which ar optionally modified by the addition of rubbers; and with

C) from 0.1 to 7 parts by weight of an organic compound containing at least two primary or secondary amino groups.

DETAILED DESCRIPTION

The results of this mixture is that a composition which shows partial crosslinking between (A) and (B). The level of crosslinking depends on the amount of unsaturated carboxylic acid and/or it derivatives, present in (A) and (B), which is mentioned below.

The term "polyolefin" mentioned in the definition of component (A) includes: polymers and copolymers, or their mixtures obtained by way of sequential polymerization of olefins of formula $R''-CH=CH_2$, where $R''$ is a hydrogen atom or an alkyl radical with 1-6 carbon atoms or a phenyl group. In particular, said polymers and copolymers include:

    1) isotactic, or mainly isotactic, or syndiotactic polypropylene;

    2) HDPE, LLDPE or LDPE polyethylene;

3) block or random copolymers of propylene with ethylene and/or other alpha-olefins, such as for example 1-butene, 1-hexene, 1-octene or 4-methyl-1-pentene.

Isotactic polypropylene is the preferred polyolefin for the preparation of component (A).

The molecular weight of the polyolefin used does not represent a critical factor; the (A) modified polyolefin has, as a way of example, Mw (weight average molecular weight) equal to 90,000 g/mole, and Mn (number average molecular weight) equal to 18,000 and a Mw/Mn polydispersity equal to 5.

Component (A) is a product available commercially, or, it can be prepared starting with the polyolefin, by way of reaction with the unsaturated carboxylic acid or its derivatives in the presence of radical initiators, such as for example peroxides, or by way of radiations or thermomechanical treatments.

The term "vinyl aromatic monomer" mentioned in the definition of component (B) refers to the class of compounds which include: styrene, divinylbenzene, o-methyl-styrene, p-methyl-styrene, m-methyl-styrene, $\alpha$-methyl-styrene, vinylnaphthalene.

The rubbers mentioned in the definition of component (B) are for example, polybutadiene, EPR (ethylene-propylene rubber), EPDM (ethylene-propylene-diene rubber), acrylic elastomers.

Representative examples of polymers and copolymers used for the preparation of component (B) are SAN (styrene-acrylonitrile), ABS (acrylonitrile-butadiene-styrene), AAS (acrylonitrile-acrylate-styrene), and HIPS (impact resistant polystyrene).

The preferred copolymer for the preparation of component (B) is SAN, i.e., a random copolymer of acrylonitrile (AN) and styrene which can be obtained by suspension, emulsion, and mass copolymerization. The composition of said copolymer is such that the amount of AN, by way of example, varies from 10 to 30% by weight.

In order to obtain component (B), the modifying reaction with the unsaturated carboxylic acid or its derivatives can occur during or after the copolymerization by way of grafting in the presence of radical initiators.

The molecular weight of this component (B) is, by way of example, Mw = 87,000, Mn = 30,000 Mw/Mn = 2.9.

The term unsaturated carboxylic acid mentioned in the definition of (A) and (B), refers to the class of compounds which include, for example: acrylic, methacrylic, maleic, itaconic, citraconic, bicyclo-[2,2,1]-hepta-5-hexa-1,2 dicarboxylic acid, bicyclo-2[2,2,2]-octa-5-ene-2,3-dicarboxylic acid, 4-methyl-cyclohexa-4-ene-1,2-dicarboxylic acid, 1,2,3,4,5,8,9,10-octahydronaphthalene-2,3-dicarboxylic acid and bicyclo-[2,2,1]-octa-7-ene-2,3,5,6-tetracarboxylic acid.

The derivatives of the unsaturated carboxylic acid include the anhydrides and the eaters of the aforementioned carboxylic acids. Specific examples of such derivatives are: maleic, itaconic, and citraconic anhydride, isopropyl acrylate and t-butyl metacrylate. Among these products maleic anhydride is the preferred one.

Among the unsaturated aromatic monomers which can be used for the preparation of component (B), styrene is the preferred one, however, p-methyl-styrene, m-methyl-styrene, o-methyl-styrene, $\alpha$-methyl-styrene and their mixtures can also be used.

The unsaturated carboxylic acid and/or its derivatives are present in each (A) and (B) component in a total amount ranging from 0.1 to 10% by weight, preferably from 0.2 to 1% by weight.

The organic compound containing at least two primary or secondary amino groups, which forms component (C), includes diamines and polyamines. Specific examples of said compounds are: 1,6-hexamethylene-diamine, N-methyl-1,6-diaminohexane, 1,8-diaminooctane, 3-methyl-1,6-diaminohexane, 1,4-diaminocyclohexane, $\beta,\beta'$diamino-p-dietylbenzene, and gamma, gamma'-diamino-di-n-propylether. Among these compounds the 1,6-hexamethylene-diamine is preferred.

Components (A), (B) and (C) can be mixed directly, for example in an extruder.

According to a preferred method, first, they are pulverized, then dried in an oven and mixed mechanically. Subsequently the mixture is extruded at a temperature ranging from 190° to 220°C.

To the mixture can be added antioxidants or other additives, such as heat stabilisers, U.V. stabilizers, flame retardants, nucleating, antistatic and plastifying agents, organic and inorganic dyes.

It is also possible to add inorganic fillers and reinforcing fibers.

Preferably, (A), (B) and (C) are mixed in a single screw extruder via two extrusions or in a twin-screw extruder.

Preferably, the amount of component (C) used is such to satisfy the relation:

$$0.1 \leq n_{NH}n_a \leq 2,$$

where $n_{NH}$ is the number of moles of amino groups present in component (C) and $n_a$ is the total number of

EP 0 536 753 A1

moles of unsaturated carboxylic acid and/or its derivatives present in components (A) and (B). More preferably, $n_{NH}/n_a$ is 1.

The data indicated in the Examples, and in the text regarding the following properties have been determined according to the methods mentioned hereafter.

- Tensile properties (tensile strength, tensile modulus, elongation at break):

according to the ASTM D638 method at 23°C, and by using a crosshead speed of 1 mm/min for the determination of the tensile strength at break.

- Flexural properties (flexural strenght, flexural modulus):

according to ASTM D790 at 23°C by using a cross head speed of 1.25 mm/min.

- Notched IZOD impact strength:

according to ASTM D256 at 23°C.

- Heat distortion temperature (HDT):

according to ASTM D648 at a pressure of 1.82 MPa.

- Linear shrinkage coefficient after molding:

as total longitudinal contraction of the bars of the same type as those used in ASTM D638M with respect to the original length of the mold cavity.

- Linear expansion coefficient:

by using a Perkin Elmer device for thermomechanical analysis and according to ASTM D696.

- Density:

by using a toluene/$CCl_4$ gradient column at 23°C.

- Level of crosslinking and study of the crosslinking reaction:

the amount of modified SAN bonded to modified polypropylene (PP) is derived by dissolving the composition obtained in orthodichlorobenzene, and by treating the solution with dimethylethylketone; the latter is a solvent in which the SAN that is not bonded to PP is soluble. By difference, it is possible to determine the amount of modified SAN bonded to modified PP which remains in said mixture as residue. For the compositions of the present invention it has been found, for example, that if the initial amount of modified SAN in the mixture is equal to 44%, the amount of such crosslinked polymer is equal to 30% of the total amount after the first extrusion, and becomes approximately 45% after the second extrusion. Said residue is analyzed by way of infrared (IR) spectroscopy analyses and DMA (Dynamic Mechanical Analysis) on pressed film. The IR analysis of the compositions of the present invention shows the absorption related to the imide group. This proves that the reaction between the diamine and the maleic anhydride has occured. The DMA analysis, which measures the modulus (in $N/mm^2$) variation versus temperature made on the compositions of the present invention, shows that there are two glass transition temperatures ($T_g$) having the same values as those of the corresponding nonmodified polymers, which are used to prepare components (A) and (B). This shows that the crosslinking density is so low as not to interfere with the chain movement involved in the glass transition.

- Determination of the amount of maleic anhydride in components (A) and (B):

the amount of maleic anhydride in the modified PP has been determined by way of titration of a modified solution of the polymer in hot xylene, with a 0.1 N solution of $KOCH_3$ in a solvent consisting of a toluene/methanol mixture (volume ratio of 90/10), using phenolphthalene as indicator. The amount of maleic

4

anhydride in the modified SAN has been determined following the same procedures, by titration of a solution of the modified SAN in dimethylformamide.

- Determination of the amount of acrylonitrile present in the modified SAN:

by way of an elementary analysis of the nitrogene contained in the polymer.

- Determination of the molecular weight:

the weight and number average molecular weight has been determined by means of a Gel Permeation Chromatographic analysis (GPC) on a Waters 150 Millipore device by using an Ultrastyragel[R] column according to the following procedures:

| Modified polypropylene: | Modified SAN: |
|---|---|
| - solvent orthodichlorobenzene | - solvent: THF |
| - temperature: 135°C | - temperature: 30°C |
| - calibration curve: polystyrene | - calibration curve: SAN of molar composition S/AN=38.3/61.7 |

- Paintability tests:

paintability tests have been carried out on injection molded 70x80x3 mm plaques, and painted according to the procedure as follows. The surface is degreased with 1,1,1-trichloroethane and then treated with a chlorinated polyolefin "primer" marketed by Eastman Kodak. After the solvent evaporation the primer film is 2-3 $\mu$m thick. The primer film is covered with a 10-15 $\mu$m thick layer of paint, which can be of different types. The paint adhesion test has been carried out according to ASTM 3359.

Examples 1 and 2

Modified powder polypropylene grafted with maleic anhydride, containing 0.4% by weight of maleic anhydride (commercial product marketed by HIMONT under the Hercoprime A tradename), and modified powder SAN grafted with maleic anhydride, containing 1.4% by weight of maleic anhydride and 27.8% by weight of acrylonitrile, are vacuum dried in an oven at 80°C for 8 hours.

1,6-hexamethylendiamine and the phenolic stabilizer marketed by Ciba Geigy under the Irganox 1010 tradename are added to the dried and mixed polymer. The compositions by weight of the two prepared mixtures are indicated in Table 1.

These mechanical mixtures are thus introduced in a single screw extruder which is provided with a screw having a compression ratio equal to 3/1 and L/D equal to 25. The diameter of the screw is 3.17 mm, and the operating conditions are: screw rate: 30 revolutions/min, temperature profile: 180-200-200 °C.

The pellets obtained from the first extrusion were dried and extruded a second time. The operating conditions were the same as those of the first extrusion. The pellets obtained from the second extrusion were dried and injection molded to form standard specimen (ASTM D638M) and plaques. The injection molding conditions were: temperature 180-190-210°C; screw rate: 250 revolutions/min; injection pressure: 90 bars.

The samples were subjected to mechanical tests. The results of the mechanical tests are set forth in Table 2 along with the mechanical properties of the nonmodified PP (commercial product marketed by HIMONT under the FLF20 tradename) and nonmodified SAN (commercial product marketed by Monsanto under the LUSTRAN 35 tradename), reported as reference. FLF20 is a isotactic propylene homopolymer having MIL (ASTM D 1238) of 10 g/10 min. and fraction soluble in xylene at 25°C of 4% by weight.

Both mixtures do not show yield.

The plaques were painted. The results obtained indicate excellent paintability characteristics. It has also been shown that this result does not change if the test is carried out on compression molded plaques. The compression molding conditions are: temperature: 200°C, pressure: 200 kg/cm$^2$.

The linear shrinkage coefficient after molding is 1.5% and 1.2% for the compositions of Examples 1 and 2, respectively, compared to a value of 1.8% obtained for PP according to the same procedures.

The linear thermal expansion for the composition of Example 2 is $3.9 \times 10^{-5}$ K$^{-1}$, compared to a value of $6.8 \times 10^{-5}$ K$^{-1}$ related to both PP and SAN.

Densities for the compositions of Examples 1 and 2 are 0.97 and 0.975 g/cm$^3$, respectively, compared to a value of 1.07 g/cm$^3$ for SAN and 0.932 g/cm$^3$ for PP.

COMPARATIVE EXAMPLE 1

A composition obtained by mixing modified PP and modified SAN, having the composition indicated in Table 1, has been prepared according to the same conditions as those of Examples 1 and 2, but without the addition of diamine.

The mechanical properties of the resulting composition are reported in Table 2. The analysis of the data reported in Table 2 shows that the compositions of the present invention have definitely improved mechanical properties and temperature resistance with respect to polypropylene.

TABLE 1

| COMPOSITIONS | | | |
|---|---|---|---|
| EXAMPLE No. | 1 | 2 | Compar. 1 |
| modified PP (g) | 2,000 | 2,000 | 2,000 |
| modified SAN (g) (wt.%) | 1,200 37 | 1,600 43.9 | 1,600 44.3 |
| 1,6-hexamethyldiamine (g) $n_{NH}/n_a$ (wt.%) | 29.5 1 0.98 | 35.9 1 0.98 | --- --- --- |
| Irganox 1010$^R$, (g) (wt.%) | 8.1 0.25 | 9.1 0.25 | 9.1 0.25 |

TABLE 2

| PROPERTIES | | | | | |
|---|---|---|---|---|---|
| POLYMER | PP(FLF20) (Himont) | Ex. 1 | Ex. 2 | SAN (LUSTRAN 35) (Monsanto) | Comp. Ex. 1 |
| Tensile strength (MPa) | 36 | 41 | 42 | 79 | 24 |
| Tensile Modulus (MPa) | 1,600 | 2,200 | 2,300 | 3,450 | 2,100 |
| Elongation at Break (%) | 800 | 3.5 | 3.6 | 3 | 1.3 |
| Flexural Strength (MPa) | 48 | 67 | --- | 37 | --- |
| Flexural Modulus (MPa) | 1,400 | 2,000 | 2,000 | | 1,800 |
| Notched Izod (J/m) | 21 | 20 | 20 | 24 | 7 |
| HDT (1.82 MPa) (°C) | 60 | 83 | 84 | 104 | 69 |

**Claims**

1. Thermoplastic polymer composition obtained by mixing:
   A) from 10 to 90 parts by weight of one or more modified polyolefin obtained by grafting an unsaturated carboxylic acid and/or its derivatives, or their mixtures with nonmodified polyolefin; with
   B) from 10 to 90 parts by weight of an aromatic vinyl polymer, or a copolymer of a vinyl aromatic monomer, with acrylonitrile and/or methacrylonitrile, modified by grafting or copolymerizing with an unsaturated carboxylic acid and/or its derivatives, or their mixtures with aromatic vinyl polymers or copolymers of an aromatic vinyl monomer with acrylonitrile and/or methacrylonitrile; and with
   C) from 0.1 to 7 parts by weight of an organic compound containing at least two primary or secondary amino groups.

2. Thermoplastic polymer composition of claim 1, where said unsaturated carboxylic acid and/or its derivatives are present in each (A) and (B) component in a total amount ranging from 0.1 to 10% by weight.

3. Thermoplastic polymer composition of claim 1, where said component (A) is isotactic polypropylene modified by grafting with maleic anhydride.

4. Thermoplastic polymer composition of claim 1, where said component (B) is a random styrene-acrylonitrile copolymer, modified by grafting with maleic anhydride.

5. Thermoplastic polymer composition of claim 1, where said component (C) is selected from the group consisting of a diamine and a polyamine.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,Y | DATABASE WPIL<br>Derwent Publications Ltd., London, GB;<br>AN 92-344652<br>& JP-A-4 248 856 (TOYODA GOSEI KK) 4 September 1992<br>* abstract *<br>--- | 1,4-5 | C08L51/06<br>C08L51/00<br>C08L51/04<br>C08K5/17<br>C08L25/12<br>C08L25/04 |
| Y | WO-A-8 901 962 (ALLIED-SIGNAL INC.)<br>* claims *<br>* page 4, line 7 - page 6, line 22;<br>examples 3-4,8 *<br>--- | 1,4-5 | |
| A | EP-A-0 409 601 (MITSUI PETROCHEMICAL INDUSTRIES LTD)<br>* claims 1,9-15 *<br>* page 9, line 22 - line 38 *<br>* page 10, line 16 - line 34 *<br>----- | 1-2,5 | |
| | | | **TECHNICAL FIELDS SEARCHED (Int. Cl.5)**<br><br>C08L<br>C08K |

The present search report has been drawn up for all claims

| Place of search | Date of completion of the search | Examiner |
|---|---|---|
| THE HAGUE | 26 JANUARY 1993 | PERSSON E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)